# EUROPEAN PATENT SPECIFICATION

(11) **EP 3 565 346 B1**
(45) Date of publication and mention of the grant of the patent: **22.09.2021**
(21) Application number: 17906480.3
(22) Date of filing: 18.04.2017
(51) Int. Cl.: H04W 72/04, H04L 5/00

(54) **METHOD AND DEVICE FOR DATA TRANSMISSION**
VERFAHREN UND VORRICHTUNG ZUR DATENÜBERTRAGUNG
PROCÉDÉ ET DISPOSITIF DE TRANSMISSION DE DONNÉES

(43) Date of publication of application: 06.11.2019
(73) Proprietor: Huawei Technologies Co., Ltd., Longgang Shenzhen, Guangdong 518129 (CN)
(72) Inventor: JIANG, Yue, Shenzhen Guangdong 518129 (CN); HUANG, Chongde, Shenzhen Guangdong 518129 (CN); ZHU, Youtuan, Shenzhen Guangdong 518129 (CN); HU, Hongjie, Shenzhen Guangdong 518129 (CN)
(74) Representative: Pfenning, Meinig & Partner mbB
(86) International application number: PCT/CN2017/080900
(87) International publication number: WO 2018/191863

(56) References cited:
- WO-A1-2016/060809
- WO-A1-2016/060809
- CN-A- 106 385 709
- CN-A- 106 455 081
- CN-A- 106 455 103
- US-A1- 2017 026 938
- FUJITSU: "Discussion on Preemption Indicator for Multiplexing eMBB and URLLC in Downlink", 3GPP DRAFT; R1-1701920 PREEMPTION BASED MULTIPLEXING FOR EMBB AND URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG1, no. Athens, Greece; 20170213 - 20170217 6 February 2017 (2017-02-06), XP051220236, Retrieved from the Internet: URL:http://www.3gpp.org/ftp/tsg_ran/WG1_RL 1/TSGR1_88/Docs/ [retrieved on 2017-02-06]
- LG ELECTRONICS: "Discussion on multiplexing of eMBB and URLLC for downlink", 3GPP DRAFT; R1-1702488 DISCUSSION ON MULTIPLEXING OF EMBB AND URLLC FOR DL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG1, no. Athens, Greece; 20170213 - 20170217 12 February 2017 (2017-02-12), XP051209642, Retrieved from the Internet: URL:http://www.3gpp.org/ftp/Meetings_3GPP_ SYNC/RAN1/Docs/ [retrieved on 2017-02-12]
- SEQUANS COMMUNICATIONS: "Preemption-based multiplexing of URLLC and eMBB in DL", 3GPP DRAFT; R1-1702117 - PREEMPTION-BASED MULTIPLEXING OF URLLC AND EMBB IN DL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG1, no. Athens, Greece; 20170213 - 20170217 12 February 2017 (2017-02-12), XP051209277, Retrieved from the Internet: URL:http://www.3gpp.org/ftp/Meetings_3GPP_ SYNC/RAN1/Docs/ [retrieved on 2017-02-12]
- FUJITSU: "Discussion on Preemption Indicator for Multiplexing eMBB and URLLC in Downlink", 3GPP DRAFT; R1-1701920 PREEMPTION BASED MULTIPLEXING FOR EMBB AND URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG1, no. Athens, Greece; 20170213 - 20170217 6 February 2017 (2017-02-06), XP051220236, Retrieved from the Internet: URL:http://www.3gpp.org/ftp/tsg_ran/WG1_RL 1/TSGR1_88/Docs/ [retrieved on 2017-02-06]
- LG ELECTRONICS: "Discussion on multiplexing of eMBB and URLLC for downlink", 3GPP DRAFT; R1-1702488 DISCUSSION ON MULTIPLEXING OF EMBB AND URLLC FOR DL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG1, no. Athens, Greece; 20170213 - 20170217 12 February 2017 (2017-02-12), XP051209642, Retrieved from the Internet: URL:http://www.3gpp.org/ftp/Meetings_3GPP_ SYNC/RAN1/Docs/ [retrieved on 2017-02-12]
- SEQUANS COMMUNICATIONS: "Preemption-based multiplexing of URLLC and eMBB in DL", 3GPP DRAFT; R1-1702117 - PREEMPTION-BASED MULTIPLEXING OF URLLC AND EMBB IN DL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. RAN WG1, no. Athens, Greece; 20170213 - 20170217 12 February 2017 (2017-02-12), XP051209277, Retrieved from the Internet: URL:http://www.3gpp.org/ftp/Meetings_3GPP_ SYNC/RAN1/Docs/ [retrieved on 2017-02-12]

## Description

### TECHNICAL FIELD

Embodiments of the present invention relate to the communications field, and more specifically, to a data transmission method and device.

### BACKGROUND

The International Telecommunication Union (ITU) defines three broad categories of services under 5G expectation and requirements. The three broad categories of services are an enhanced mobile broadband service (eMBB), ultra low latency and ultra-reliable machine type communications (uMTC), and massive machine type communications (mMTC).

The eMBB service has a low latency requirement. To pursue spectral efficiency, a large amount of calculation exists in scheduling and consumes a relatively long time. When data arrives, a particular time may be waited. However, the uMTC service has a high latency requirement, scheduling consumes a relatively short time, the uMTC service is usually started later than the eMBB, and when data arrives, a resource may be scheduled and allocated without waiting basically.

In the prior art, in a cell in which the uMTC and the eMBB coexist, the uMTC uses a reserved air interface resource, and the eMBB cannot use the air interface resource of the uMTC. An activation probability of the uMTC service is low, and reserved resources cannot be used because the resources are idle in most of time. Therefore, in this manner, there is a great waste of air interface resources.

To improve resource utilization in a scenario in which the two services coexist, during uMTC scheduling, a resource that has already been allocated to the eMBB may be preempted in various manners based on requirements. In this way, no resource needs to be reserved, and when the uMTC service is not activated, all resources may be allocated to the eMBB.

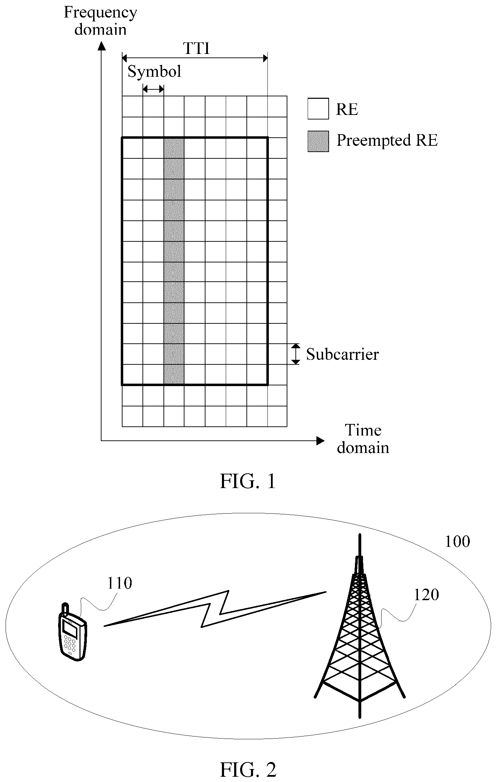

Specifically, an example in which an air interface resource is preempted is used. As shown in FIG. 1, an air interface resource is defined as a time domain resource and a frequency domain resource. The air interface resource is divided into subcarriers in frequency domain, and the air interface resource is divided into symbols in time domain. The air interface resource includes frequency domain and time domain division grids. Each grid is a resource element (RE), and indicates a resource of one subcarrier within one symbol time. Each RE can carry particular information. N consecutive symbols constitute one subframe, and the subframe is used as a transmission time interval (TTI). Scheduling and resource allocation are performed once at each TTI. M subcarriers in one TTI together constitute one resource block (RB).

However, in an existing solution, after a resource of the eMBB is preempted by the uMTC, performance of detection performed by a receive end on the eMBB is seriously affected.

FUJITSU, "Discussion on Preemption Indicator for Multiplexing eMBB and URLLC in Downlink", vol. RAN WG1, Meeting#88, Athens, Greece; 20170213-20170217, (20170206), 3GPP DRAFT; R1-1701920, proposes a preemption indicator and some control information on a resource preempted for URLLC transmission. LG ELECTRONICS, "Discussion on multiplexing of eMBB and URLLC for downlink", Meeting #88, vol. RAN WG1, Athens, Greece; 20170213-20170217, (20170212), 3GPP DRAFT; R1-1702488, and SEQUANS COMMUNICATIONS, "Preemption-based multiplexing of URLLC and eMBB in DL", vol. RAN WG1, Meeting #88, Athens, Greece; 20170213-20170217, (20170212), 3GPP DRAFT, R1-1702117, discuss multiplexing and preemption based multiplexing of eMBB and URLLC for downlink. WO2016060809A1 concerns transmission preemption control for enhanced component layers.

### SUMMARY

Embodiments of the present invention provide a data transmission method, a system and a device according to the independent claims, so that when a resource position of a first data packet is preempted, performance of detection performed by a receive end on the first data packet can be effectively improved. Further embodiments of the current invention are specified in the dependent claims. Subsequently described aspects and possible implementations are to be considered embodiments of the current invention if, and only if, they fall under the scope of any of the independent claims.

According to a first aspect, a data transmission method is provided. The method includes:
when a resource position of a first data packet is preempted, generating, by a first device, first indication information, where the first indication information is used to indicate information about the preempted resource position of the first data packet; and
sending, by the first device, the first indication information to a second device, so that the second device receives the first data packet based on the first indication information.

In this aspect, the first device feeds back the preempted position to the second device by using the first indication information, so that the second device can discard information on the preempted position by using the information about the preempted position during data detection and HARQ combination.

The method further includes:
determining, by the first device based on information about a preempted resource of the first data packet, a performance parameter of demodulation performed by the second device on the first data packet;
determining, by the first device, second indication information based on the demodulation performance parameter, where the second indication information is used to indicate a data type of a second data packet, the second data packet is sent after the first data packet, and data of the first data packet is the same as data of the second data packet; and
sending, by the first device, the second data packet to the second device, where the second data packet includes the second indication information.

In this aspect, when the resource of the first data packet is preempted by another data packet, the first device can adaptively adjust an HARQ transmission by evaluating a demodulation performance loss caused by the preemption, thereby improving spectral efficiency.

In some possible implementations, the determining, by the first device, second indication information based on the demodulation performance parameter includes:
determining, by the first device, the second indication information based on the demodulation performance parameter and a modulation and coding scheme MCS.

In some possible implementations, the determining, by the first device, the second indication information based on the demodulation performance parameter and a modulation and coding scheme MCS includes:
if the demodulation performance parameter is greater than a first threshold corresponding to the MCS, determining, by the first device, that the second indication information is used to indicate that the second data packet is new data;
if the demodulation performance parameter is less than the first threshold and greater than a second threshold corresponding to the MCS, determining that the second indication information is used to indicate that the second data packet is retransmitted data of the first data packet, and a redundancy version of the second data packet is the same as a redundancy version of the first data packet; or
if the demodulation performance parameter is less than the second threshold, determining that the second indication information is used to indicate that the second data packet is the retransmitted data of the first data packet, and the redundancy version of the second data packet is different from the redundancy version of the first data packet.

In some possible implementations, the first device may feed back the preempted position to the second device, so that the second device can discard the information on the preempted position by using the information about the preempted position during the data detection and the HARQ combination, thereby improving the detection performance of the second device.

In some possible implementations, when the second indication information is used to indicate that the second data packet is the retransmitted data of the first data packet, the method further includes:
accumulating a quantity of retransmissions of the first data packet, where the quantity of transmissions is used to determine the first threshold, and the quantity of transmissions of the first data packet is added to the quantity of retransmissions, or the quantity of transmissions of the first data packet is not added to the quantity of retransmissions.

In some possible implementations, the sending, by the first device, the first indication information to a second device includes:
sending, by the first device, the first data packet to the second device, where the first data packet includes the first indication information; or
sending, by the first device, the first indication information to the second device after sending the first data packet.

In some possible implementations, the first indication information includes at least one of the following information:
preempted time-frequency resource position information, information about a bit position preempted before encoding, and information about a bit position preempted after the encoding.

In some possible implementations, when preempted resources of the first data packet are contiguous, the first indication information includes preempted start position information and preempted end position information.

In some possible implementations, the second indication information includes a new data indicator NDI and/or a redundancy version RV.

In a possible implementation, the method further includes:
receiving, by a second device, the first indication information sent by the first devicewhere the first indication information includes information about a preempted resource position of a first data packet; and
receiving, by the second device, the first data packet based on the first indication information.

In some possible implementations, the receiving, by the second device, the first data packet based on the first indication information includes:
when detecting the first data packet, ignoring, by the second device, data on the preempted resource position of the first data packet based on the first indication information.

In some possible implementations, the method further includes:
receiving, by the second device, the second indication information sent by the first device, where the second indication information is used to indicate a data type of a second data packet.

In some possible implementations, the second indication information indicates that the second data packet is retransmitted data of the first data packet, and the receiving, by the second device, the first data packet based on the first indication information includes:
when combining the retransmitted data and the first data packet, ignoring, by the second device, information about the data on the preempted resource position of the first data packet based on the first indication information.

In some possible implementations, the first indication information includes at least one of the following information:
preempted time-frequency resource position information, information about a bit position preempted before encoding, and information about a bit position preempted after the encoding.

In some possible implementations, when preempted resources of the first data packet are contiguous, the first indication information includes preempted start position information and preempted end position information.

According to a second aspect, a device is provided. The device includes:
a processing unit, configured to: when a resource position of a first data packet is preempted, generate first indication information, where the first indication information is used to indicate information about the preempted resource position of the first data packet; and
a sending unit, configured to send the first indication information to a second device, so that the second device receives the first data packet based on the first indication information.

According to a third aspect, a device is provided. The device includes:
a processor, configured to: when a resource position of a first data packet is preempted, generate first indication information, where the first indication information is used to indicate information about the preempted resource position of the first data packet; and
a transmitter, configured to send the first indication information to a second device, so that the second device receives the first data packet based on the first indication information.

According to a fourth aspect, a system comprising a device according to the second or the third aspect and a further device is provided. The further device includes a receiving unit, and the receiving unit is configured to:
receive the first indication information sent by the first device, where the first indication information includes information about a preempted resource position of a first data packet; and
receive the first data packet based on the first indication information.

According to a fifth aspect, a system comprising a device according to the second or the third aspect and a further device is provided. The further device includes a transceiver, and the transceiver is configured to:
receive the first indication information sent by the first device, where the first indication information includes information about a preempted resource position of a first data packet; and
receive the first data packet based on the first indication information.

According to a sixth aspect, a computer-readable storage medium is provided. The computer-readable storage medium stores a program, and the program enables a first device to perform the method according to any one of the first aspect or the possible implementations of the first aspect.

According to a seventh aspect, a computer-readable storage medium is provided. The computer-readable storage medium stores a program, and the program enables a second device to perform the method according to any one of the first aspect or the possible implementations of the first aspect.

According to an eighth aspect, a computer program product including an instruction is provided. When the computer program product is run on a computer, the computer is enabled to perform the method according to the foregoing aspects.

### BRIEF DESCRIPTION OF DRAWINGS

FIG. 1 is a schematic diagram of an air interface resource in the prior art;
FIG. 2 is a diagram of an example of a network structure according to an embodiment of the present invention;
FIG. 3 is a schematic flowchart of a data transmission method according to an embodiment of the present invention;
FIG. 4 is a diagram of an example of a structure of first indication information according to an embodiment of the present invention;
FIG. 5 is another schematic flowchart of a data transmission method according to an embodiment of the present invention;
FIG. 6 is a schematic block diagram of a first device according to an embodiment of the present invention;
FIG. 7 is another schematic block diagram of a first device according to an embodiment of the present invention;
FIG. 8 is a schematic block diagram of a second device comprised in a system according to an embodiment of the present invention; and
FIG. 9 is another schematic block diagram of a second device comprised in a system according to an embodiment of the present invention.

### DESCRIPTION OF EMBODIMENTS

The following describes technical solutions in the embodiments of the present invention with reference to the accompanying drawings.

FIG. 2 is a schematic diagram of an application scenario according to an embodiment of the present invention. It should be understood that FIG. 2 is merely an example for description, and examples of the present invention are not limited thereto.

As shown in FIG. 2, a communications system 100 may include a terminal device 110 and a network device 120. The network device 120 may communicate with the terminal device 110 by using an air interface.

The network device 120 sends downlink data to the terminal device 110. The terminal device 110 generates an acknowledgement (ACK) or a negative acknowledgement (NACK) through decoded CRC check, and feeds back the ACK or the NACK to the network device 120. The network device 120 determines, based on the received ACK/NACK, whether to retransmit data or send new data on a same hybrid automatic repeat request (HARQ) process number. The retransmitted data and historical data are combined and detected on the terminal device 110.

For a scenario in which uMTC preempts a resource of eMBB, if a resource corresponding to target data of the eMBB is preempted by target data of the uMTC, the terminal device 110 receives an interference signal rather than a required target signal on a time-frequency resource position. In this case, when the terminal device 110 detects data, demodulation and decoding performance is seriously affected.

In other words, the network device 120 selects, based on only an ACK/NACK fed back by the terminal device 110, to retransmit data. If resources of the eMBB that are preempted by the uMTC make up an excessively large proportion, a data block of eMBB cannot be correctly detected within a quantity of retransmissions. In this way, a plurality of retransmissions obviously reduces system efficiency.

An objective of the embodiments of the present invention is to resolve a problem that HARQ transmission efficiency in a preemptive air interface is not high.

It should be understood that in this embodiment of the present invention, the communications system 100 is merely an example for description, but this embodiment of the present invention is not limited thereto. To be specific, the technical solutions of the embodiments of the present invention can be applied to various communications systems, such as: a Global System of Mobile communication (GSM), a Code Division Multiple Access (CDMA) system, a Wideband Code Division Multiple Access (WCDMA) system, a General Packet Radio Service (GPRS), a Long Term Evolution (LTE) system, an LTE frequency division duplex (FDD) system, an LTE time division duplex (TDD) system, and a Universal Mobile Telecommunication System (UMTS).

The network device 120 may be an entity that is on a network side and that is configured to send or receive a signal. For example, the network device 120 may be machine type communication (MTC) user equipment, a base transceiver station (BTS) in GSM or CDMA, a NodeB in WCDMA, an evolved NodeB (eNB or eNodeB) in LTE, or a base station device in a 5G network.

In addition, the terminal device 110 may communicate with one or more core networks by using a radio access network (RAN). The terminal device 110 may also be referred to as an access terminal, user equipment (UE), a user unit, a user station, a mobile site, a mobile station, a remote station, a remote terminal, a mobile device, a user terminal, a terminal, a wireless communications device, a user agent, or a user apparatus. For example, the terminal device 110 may be a cellular phone, a cordless phone, a session initiation protocol (SIP) phone, a wireless local loop (WLL) station, a personal digital assistant (PDA), a handheld device or a computing device having a wireless communication function, another processing device connected to a wireless modem, an in-vehicle device, a wearable device, or a terminal device in a future 5G network.

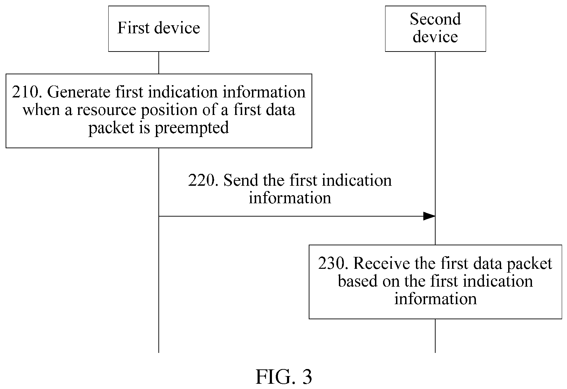

FIG. 3 is a schematic flowchart of a data transmission method 200 according to an embodiment of the present invention.

As shown in FIG. 3, the method 200 includes the following steps.

210: When a resource position of a first data packet is preempted, a first device generates first indication information.

Specifically, when the resource position of the first data packet is preempted by another data packet, a second device (receive end) needs to optimize demodulation and decoding based on information about the preempted position. Therefore, when the resource position of the first data packet is preempted, the first device may generate the first indication information, and the first indication information is used to indicate the information about the preempted resource position of the first data packet.

Optionally, the first indication information in this embodiment of the present invention may include the information about the preempted resource position of the first data packet.

It should be noted that the resource position of the first data packet may be preempted by other data packets in different phases. For example, the resource position of the first data packet is preempted on a modulated symbol (constellation diagram mapping), and the preempted position corresponds to time-frequency resource positions of an air interface, namely, an RE position and an RB position. For another example, the resource position of the first data packet is preempted during a process such as rate matching or interleaving, and the preempted position corresponds to a bit position after encoding. For another example, the resource position of the first data packet is preempted during an encoding process, and the preempted position corresponds to a coded bit position.

To be specific, the first indication information includes at least one of the following information:
preempted time-frequency resource position information, information about a bit position preempted before encoding, and information about a bit position preempted after the encoding.

Optionally, when preempted resources of the first data packet are contiguous, the first indication information may include preempted start position information and preempted end position information.

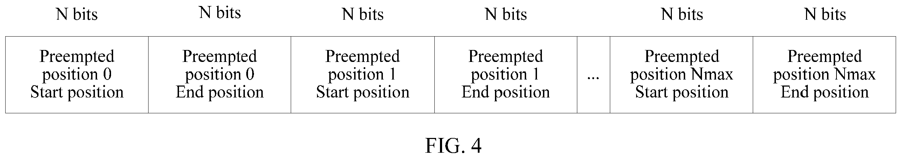

Specifically, as shown in FIG. 4, when the first indication information indicates contiguous preempted resource positions in N bits, only a start position and an end position need to be indicated.

It should be understood that in this embodiment of the present invention, the first indication information may directly carry the information about the preempted resource position of the first data packet, or the information about the preempted resource position of the first data packet may be impliedly indicated to the second device. This is not specifically limited in this embodiment of the present invention.

For example, the first device may establish a correspondence between at least one piece of resource position information and at least one identifier, and send the correspondence to the second device, so that when the resource position of the first data packet is preempted, the first device may directly send an identifier corresponding to the preempted resource position to the second device, and the like.

220: The first device sends the first indication information to the second device.

Specifically, after generating the first indication information, the first device sends the first indication information to the second device.

Optionally, the first device sends the first data packet to the second device, and the first data packet includes the first indication information. Alternatively, the first device sends the first indication information to the second device after sending the first data packet.

Specifically, the first device can generate the first indication information only after the resource position of the first data packet is preempted by another data packet. Therefore, after the first device generates the first indication information, if the first indication information can be carried in the first data packet, the first device may add the first indication information to the first data packet; or if the first indication information cannot be carried in the first data packet, after sending the first data packet, the first device may separately send the first data packet to the second device, or add the first data packet to another data packet and then send the another data packet to the second device.

230: The second device receives the first data packet based on the first indication information.

Specifically, the second device determines the preempted resource position of the first data packet based on the first indication information sent by the first device, and ignores data information on the preempted resource position of the first data packet when detecting or combining the first data packet.

For example, when detecting the first data packet, the second device ignores data on the preempted resource position of the first data packet based on the first indication information. To be specific, if the first device can indicate the preempted resource position in the current transmission, the second device ignores the data information on the corresponding position during the current data detection.

For another example, when the first device sends retransmitted data of the first data packet to the second device by using an HARQ technology, the second device may ignore the data information on the corresponding position during HARQ combination.

To be specific, in this embodiment of the present invention, the first device feeds back the preempted position to the second device by using the first indication information, so that the second device can discard the information on the preempted position during the data detection and the HARQ combination by using the information about the preempted position, thereby improving detection performance of the second device.

It should be understood that, with reference to the accompanying drawings, when the resource of the first data packet is preempted by another data, the first device needs to send the information about the preempted resource position of the first data packet to the second device, so that the second device detects the first data packet based on the first indication information.

In this embodiment of the present invention, to further improve spectral efficiency,
optionally, the first device (a transmit end) may adaptively adjust an HARQ transmission policy of a preempted user and indicate the adjusted HARQ transmission policy to the second device (the receive end).

Specifically, the first device determines, based on information about the preempted resource of the first data packet, a performance parameter of demodulation performed by the second device on the first data packet. The first device determines second indication information based on the demodulation performance parameter. The second indication information is used to indicate a data type of a second data packet, the second data packet is sent after the first data packet, and data of the first data packet is the same as data of the second data packet. The first device sends the second data packet to the second device, and the second data packet includes the second indication information.

To be specific, when the resource of the first data packet is preempted by another data packet, the first device adaptively adjusts an HARQ transmission by evaluating a demodulation performance loss caused by the preemption, thereby improving the spectral efficiency.

It should be understood that in this embodiment of the present invention, the data of the second data packet may be the same as the data of the first data packet. In addition, a redundancy version of the second data packet and a redundancy version of the first data packet may be the same or may be different. Redundancy versions correspond to different coded bit subsets, and the subsets include different bits.

In addition, in this embodiment of the present invention, the HARQ technology is used, to be specific, the first device can retransmit a data packet that fails to be transmitted last time. Therefore, the first device needs to indicate, by using the second indication information to the second device, whether the currently transmitted packet is a retransmitted data packet or an initially transmitted data packet.

Optionally, the second device receives the second indication information sent by the first device, and the second indication information is used to indicate the data type of the second data packet. The second device processes the second data packet based on the data type of the second data packet.

For example, if the second indication information indicates that the second data packet is the retransmitted data of the first data packet, when combining the retransmitted data and the first data packet, the second device ignores the data information on the preempted resource position of the first data packet based on the first indication information.

Optionally, the first device determines the second indication information based on the demodulation performance parameter and a modulation and coding scheme (Modulation and Coding Scheme, MCS).

Specifically, the MCS may correspond to a plurality of thresholds. For example, in the prior art, there are 32 combinations in total for the MCS. Each of the 32 combinations may correspond to one or more thresholds, or a plurality of combinations of the 32 combinations correspond to one threshold, or the like. The first device determines the second indication information based on the demodulation performance parameter and a threshold corresponding to the MCS of the first data packet.

For example, if the demodulation performance parameter is greater than a first threshold corresponding to the MCS, the first device determines that the second indication information is used to indicate that the second data packet is new data.

In other words, if the second indication information is used to indicate that the second data packet is new data, the second device clears a buffer of received data, and stores the second data packet.

It should be noted that in this embodiment of the present invention, the data of the second data packet may be the same as the data of the first data packet. To be specific, the second indication information is used to instruct the second device to clear only the buffer of the received data. However, for the first device, the data of the second data packet may be the data of the first data packet.

For another example, if the demodulation performance parameter is less than the first threshold and greater than a second threshold corresponding to the MCS, the first device determines that the second indication information is used to indicate that the second data packet is the retransmitted data of the first data packet, and the redundancy version of the second data packet is the same as the redundancy version of the first data packet.

For another example, if the demodulation performance parameter is less than the second threshold, the first device determines that the second indication information is used to indicate that the second data packet is the retransmitted data of the first data packet, and the redundancy version of the second data packet is different from the redundancy version of the first data packet. Optionally, redundancy information in the redundancy version of the second data packet is more than redundancy information in the redundancy version of the first data packet, or redundancy information in the redundancy version of the second data packet is less than redundancy information in the redundancy version of the first data packet.

In other words, if the second indication information is used to indicate that the second data packet is the retransmitted data of the first data packet, the second device stores the second data packet in the buffer of the received data based on the second indication information, and performs combined decoding on the second data packet and the first data packet.

In this embodiment of the present invention, the first device may feed back the preempted position to the second device, so that the second device can discard the information on the preempted position by using the information about the preempted position during the data detection and the HARQ combination, thereby improving the detection performance of the second device.

It should be understood that, the first threshold and/or the second threshold in the foregoing descriptions is merely an example for description, and this embodiment of the present invention is not limited thereto.

Optionally, the second indication information includes a new data indicator (NDI) and/or a redundancy version (RV).

Specifically, each HARQ process stores an NDI value. In this value, one bit is used to indicate whether scheduled data is newly transmitted or retransmitted. If an NDI value in a same HARQ process is toggled (NDI toggled) than before, it indicates that a current transmission is an initial transmission of a new data packet; otherwise, (NDI not toggled) indicates that a current transmission is a retransmission of a same data packet.

In other words, when sending a data packet, the first device sets one-bit new data indicator signaling NDI. Each time a new data packet is sent, the NDI is toggled once, and after receiving the toggled NDI, the second device clears the buffer of the received data and stores new data; however, when a data packet is retransmitted, the NDI remains unchanged, and after receiving the unchanged NDI, the second device stores the NDI in the buffer of the received data, and performs combined decoding with an earlier version.

For example, if the NDI is toggled (0 is changed to 1, or 1 is changed to 0), it indicates that a new transmission is to be performed this time.

It should be understood that, in this embodiment of the present invention, a specific value of the NDI at each time is not limited, but only whether the value of the NDI is changed is considered.

In this embodiment of the present invention, optionally, the first device accumulates a quantity of retransmissions of the first data packet, the quantity of transmissions is used to determine the first threshold, and the quantity of transmissions of the first data packet is added to the quantity of retransmissions, or the quantity of transmissions of the first data packet is not added to the quantity of retransmissions.

It should be understood that in this embodiment of the present invention, the first device can adaptively adjust the HARQ transmission by evaluating the demodulation performance loss caused by the preemption, thereby improving the spectral efficiency. However, for an actual transmission process, the first device may alternatively be subject to a received ACK/NACK.

For example, the first device determines, by evaluating the demodulation performance loss caused by the preemption, that the second indication information is used to indicate that the second data packet is the retransmitted data of the first data packet. However, the first device also receives feedback information for the first data packet that is sent by the second device, and the feedback information indicates that the first data packet has already been successfully received, so that the first device may re-determine that the second indication information is used to indicate that the second data packet is the new data.

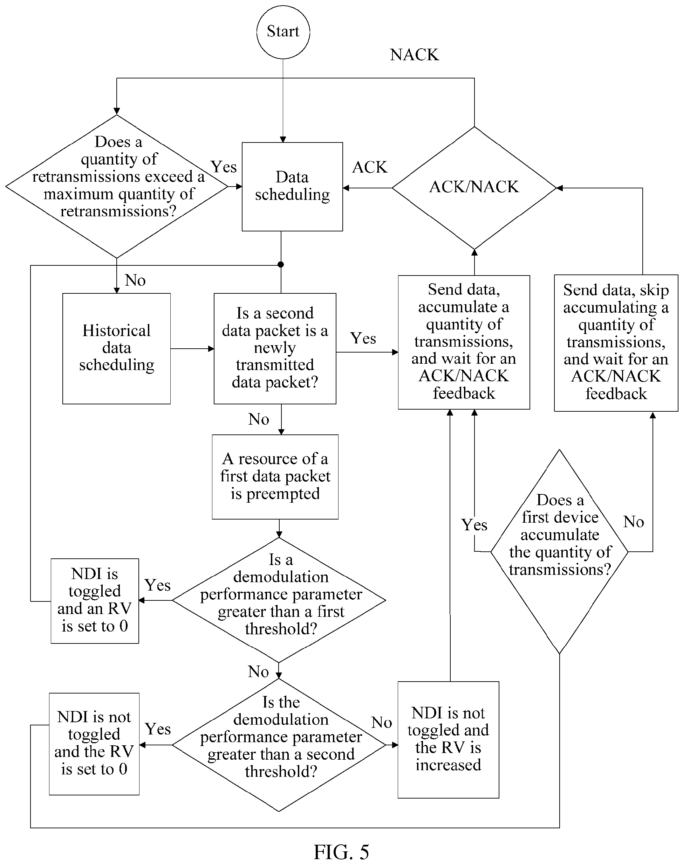

FIG. 5 is another schematic flowchart of a data transmission method according to an embodiment of the present invention.

As shown in FIG. 5, a first device performs data scheduling, and sends a second data packet to a second device.

In an embodiment, if the second data packet is newly transmitted data, the first device accumulates a quantity of transmissions, and waits to receive an ACK/NACK feedback for the second data packet that is sent by the second device.

In another embodiment, if the second data packet is not newly transmitted data, the first device determines second indication information of the second data packet based on a preempted resource of a previously transmitted first data packet and a threshold corresponding to an MCS. Specifically, the first device determines the second indication information based on the preempted resource of the first data packet and the threshold corresponding to the MCS. More specifically, if the demodulation performance parameter is greater than a first threshold, the first device determines that in the second indication information, an NDI is toggled and an RV is set to 0; if the demodulation performance parameter is less than the first threshold and greater than a second threshold, the first device determines that in the second indication information, the NDI is not toggled and the RV remains unchanged; or if the demodulation performance parameter is less than the second threshold, the first device determines that in the second indication information, the NDI is not toggled and the RV is increased. After determining the second indication information, the first device adds the second indication information to the second data packet, and sends the second data packet to the first device.

In this case, the first device may add a quantity of transmissions of the first data packet to the quantity of retransmissions, or the first device may alternatively not add a quantity of transmissions of the first data packet to the quantity of retransmissions. The second device waits to receive the ACK/NACK feedback for the second data packet that is sent by the second device.

Finally, if the first device receives the NACK feedback for the second data packet, the first device performs data scheduling or historical data scheduling again based on a maximum quantity of retransmissions. If the first device receives the ACK feedback for the second data packet, the first device performs data scheduling again.

The data transmission method in the embodiments of the present invention is described above, and devices in the embodiments of the present invention are described below.

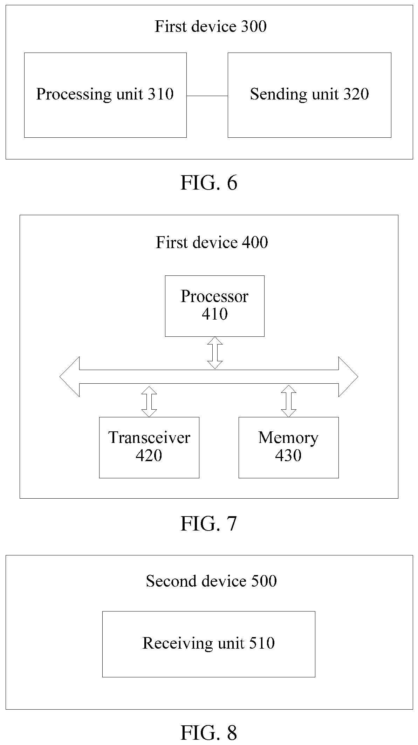

FIG. 6 is a schematic block diagram of a first device 300 according to an embodiment of the present invention.

As shown in FIG. 6, the first device 300 includes:
a processing unit 310, configured to: when a resource position of a first data packet is preempted, generate first indication information, where the first indication information is used to indicate information about the preempted resource position of the first data packet; and
a sending unit 320, configured to send the first indication information to a second device, so that the second device receives the first data packet based on the first indication information.

Optionally, the processing unit 310 is further configured to:
determine, based on information about a preempted resource of the first data packet, a performance parameter of demodulation performed by the second device on the first data packet; determine second indication information based on the demodulation performance parameter, where the second indication information is used to indicate a data type of a second data packet, the second data packet is sent after the first data packet, and data of the first data packet is the same as data of the second data packet; and send the second data packet to the second device, where the second data packet includes the second indication information.

Optionally, the processing unit 310 is specifically configured to:
determine the second indication information based on the demodulation performance parameter and a modulation and coding scheme MCS.

Optionally, the processing unit 310 is specifically configured to:
if the demodulation performance parameter is greater than a first threshold corresponding to the MCS, determine that the second indication information is used to indicate that the second data packet is new data;
if the demodulation performance parameter is less than the first threshold and greater than a second threshold corresponding to the MCS, determine that the second indication information is used to indicate that the second data packet is retransmitted data of the first data packet, and a redundancy version of the second data packet is the same as a redundancy version of the first data packet; or
if the demodulation performance parameter is less than the second threshold, determine that the second indication information is used to indicate that the second data packet is the retransmitted data of the first data packet, and the redundancy version of the second data packet is different from the redundancy version of the first data packet.

Optionally, when the second indication information is used to indicate that the second data packet is the retransmitted data of the first data packet, the processing unit 310 is further configured to:
accumulate a quantity of retransmissions of the first data packet, where the quantity of transmissions is used to determine the first threshold, and the quantity of transmissions of the first data packet is added to the quantity of retransmissions, or the quantity of transmissions of the first data packet is not added to the quantity of retransmissions.

Optionally, the sending unit 320 is specifically configured to:
send the first data packet to the second device, where the first data packet includes the first indication information; or send the first indication information to the second device after sending the first data packet.

Optionally, the first indication information includes at least one of the following information:
preempted time-frequency resource position information, information about a bit position preempted before encoding, and information about a bit position preempted after the encoding.

Optionally, when preempted resources of the first data packet are contiguous, the first indication information includes preempted start position information and preempted end position information.

Optionally, the second indication information includes a new data indicator NDI and/or a redundancy version RV.

It should be noted that in this embodiment of the present invention, the processing unit 310 may be implemented by using a processor, and the transceiver unit 320 may be implemented by using a transceiver. As shown in FIG. 7, a first device 400 may include a processor 410, a transceiver 420, and a memory 430. The memory 430 may be configured to store indication information, or may be configured to store code, an instruction, and the like that are to be executed by the processor 410. As an example rather than a limitation, the processor 410, the transceiver 420, and the memory 430 communicate with and are connected to each other in a manner such as by using a bus.

FIG. 8 is a schematic block diagram of a first device 500 comprised in a system according to an embodiment of the present invention.

As shown in FIG. 8, the device 500 includes a receiving unit 510, and the receiving unit 510 is configured to:
receive first indication information sent by a first device, where the first indication information includes information about a preempted resource position of a first data packet; and receive the first data packet based on the first indication information.

Optionally, the receiving unit 510 is specifically configured to:
when detecting the first data packet, ignore data on the preempted resource position of the first data packet based on the first indication information.

Optionally, the receiving unit 510 is further configured to:
receive the second indication information sent by the first device, where the second indication information is used to indicate a data type of a second data packet.

Optionally, the second indication information indicates that the second data packet is retransmitted data of the first data packet, and the receiving unit 510 is specifically configured to:
when combining the retransmitted data and the first data packet, ignore information about the data on the preempted resource position of the first data packet based on the first indication information.

Optionally, the first indication information includes at least one of the following information:
preempted time-frequency resource position information, information about a bit position preempted before encoding, and information about a bit position preempted after the encoding.

Optionally, when preempted resources of the first data packet are contiguous, the first indication information includes preempted start position information and preempted end position information.

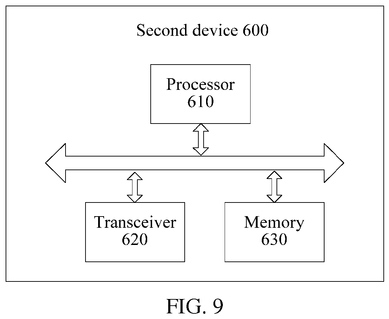

It should be noted that in this embodiment of the present invention, the receiving unit 510 may be implemented by using a transceiver. As shown in FIG. 9, a first device 600 may include a processor 610, a transceiver 620, and a memory 630. The memory 630 may be configured to store indication information, or may be configured to store code, an instruction, and the like that are to be executed by the processor 610. As an example rather than a limitation, the processor 610, the transceiver 620, and the memory 630 communicate with and are connected to each other in a manner such as by using a bus.

It should be noted that a method performed by the processor in this embodiment of the present invention is the same as content of the foregoing method embodiments, and details are not described herein again. For example, the first device 300 or the first device 400 may perform the method performed by the first device in the foregoing method embodiment, and the second device 500 or the second device 600 may perform the method performed by the second device in the foregoing method embodiment.

It should be noted that the foregoing method embodiments may be applied to a processor or may be implemented by a processor. The processor may be an integrated circuit chip and has a signal processing capability. In an implementation process, the steps in the foregoing method embodiments may be implemented by using an integrated logic circuit of hardware in the processor or an instruction in a form of software. The processor may be a general purpose processor, a digital signal processor (DSP), an application-specific integrated circuit (ASIC), a field programmable gate array (FPGA) or another programmable logic device, a transistor logic device, or a discrete hardware component. All the methods, steps, and logical block diagrams disclosed in the embodiments of the present invention can be implemented or performed by the processor. The general purpose processor may be a microprocessor or the processor may be any conventional processor, or the like. The steps of the methods disclosed in the embodiments of the present invention may be directly performed and completed by a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor.

It can be understood that, the memory in the embodiments of the present invention may be a volatile memory or a non-volatile memory, or may include a volatile memory and a non-volatile memory. The non-volatile memory may be a read-only memory (ROM), a programmable read-only memory (PROM), an erasable programmable read-only memory (EPROM), an electrically erasable programmable read-only memory (EEPROM), or a flash memory. The volatile memory may be a random access memory (RAM), used as an external cache. As an example rather than a limitation, many forms of RAMs are available, for example, a static random access memory (SRAM), a dynamic random access memory (DRAM), a synchronous dynamic random access memory (SDRAM), a double data rate synchronous dynamic random access memory (DDR SDRAM), an enhanced synchronous dynamic random access memory (ESDRAM), a synchlink dynamic random access memory (SLDRAM), and a direct rambus random access memory (DR RAM). It should be noted that the memory in the system and method described in this specification intends to include but is not limited to these memories and any other appropriate types of memories.

The terms used in the embodiments of the present invention are merely for the purpose of illustrating specific embodiments.

For example, the term "and/or" in this embodiment of the present invention describes only an association relationship for describing associated objects and represents that three relationships may exist. Specifically, A and/or B may represent the following three cases: Only A exists, both A and B exist, and only B exists. In addition, the character "/" in this specification generally indicates an "or" relationship between the associated objects.

For another example, the terms "a", "said", and "the" of singular forms used are also intended to include plural forms, unless otherwise specified in the context clearly.

For another example, in the embodiments of the present invention, terms such as first, second, third, and the like may be used to describe various types of devices, indication information, and data packets. However, these devices, indication information, and data packets should not be limited to the terms. These terms are used only to distinguish the devices, indication information, and the data packets.

For another example, depending on the context, for example, words "if" or "as if" used herein may be explained as "while..." or "when..." or "in response to determining" or "in response to detection". Similarly, depending on the context, phrase "if determining" or "if detecting (a stated condition or event)" may be explained as "when determining" or "in response to determining" or "when detecting (the stated condition or event)" or "in response to detection (the stated condition or event)".

Persons of ordinary skill in the art may be aware that, the units and algorithm steps in the examples described with reference to the embodiments disclosed in this specification may be implemented by using electronic hardware or a combination of computer software and electronic hardware. Whether the functions are performed by hardware or software depends on particular applications and design constraint conditions of the technical solutions. A person skilled in the art may use a different method to implement the described functions for each particular application, but it should not be considered that the implementation goes beyond the scope of the embodiments of the present invention.

A person skilled in the art may clearly understand that, for the purpose of convenient and brief description, for a detailed working process of the system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the embodiments of the present invention.

In addition, each of the function units in embodiments of the present invention may be integrated into a processing unit, or may exist alone physically, or two or more units are integrated into a unit.

When functions are implemented in the form of a software functional unit and sold or used as an independent product, the functions may be stored in a computer-readable storage medium. Based on such an understanding, the technical solutions in the embodiments of the present invention essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in the embodiments of the present invention. The storage medium includes any medium that can store program code, such as a USB flash drive, a removable hard disk, a memory, a magnetic disk, or an optical disc.

The foregoing descriptions are merely specific implementations of the present invention, but are not intended to limit the protection scope of the present invention. Therefore, the protection scope of the present invention is defined by the claims.

## Claims

1. A data transmission method, comprising:
when a resource position of a first data packet is preempted, generating (210), by a first device, first indication information, wherein the first indication information is used to indicate information about the preempted resource position of the first data packet; and
sending (220), by the first device, the first data packet and the first indication information to a second device, so that the second device receives the first data packet based on the first indication information, **characterized in that** the method further comprises:
determining, by the first device based on information about a preempted resource of the first data packet, a performance parameter of demodulation performed by the second device on the first data packet;
determining, by the first device, second indication information based on the demodulation performance parameter, wherein the second indication information is used to indicate a data type of a second data packet, the second data packet is sent after the first data packet, and data of the first data packet is the same as data of the second data packet; and
sending, by the first device, the second data packet to the second device, wherein the second data packet comprises the second indication information.

2. The method according to claim 1, wherein the determining, by the first device, second indication information based on the demodulation performance parameter comprises:
determining, by the first device, the second indication information based on the demodulation performance parameter and a modulation and coding scheme MCS.

3. The method according to claim 2, wherein the determining, by the first device, the second indication information based on the demodulation performance parameter and a modulation and coding scheme MCS comprises:
if the demodulation performance parameter is greater than a first threshold corresponding to the MCS, determining, by the first device, that the second indication information is used to indicate that the second data packet is new data;
if the demodulation performance parameter is less than the first threshold and greater than a second threshold corresponding to the MCS, determining that the second indication information is used to indicate that the second data packet is retransmitted data of the first data packet, and a redundancy version of the second data packet is the same as a redundancy version of the first data packet; or
if the demodulation performance parameter is less than the second threshold, determining that the second indication information is used to indicate that the second data packet is the retransmitted data of the first data packet, and the redundancy version of the second data packet is different from the redundancy version of the first data packet.

4. The method according to claim 3, wherein when the second indication information is used to indicate that the second data packet is the retransmitted data of the first data packet, the method further comprises:
accumulating a quantity of retransmissions of the first data packet, wherein the quantity of transmissions is used to determine the first threshold, and the quantity of transmissions of the first data packet is added to the quantity of retransmissions, or the quantity of transmissions of the first data packet is not added to the quantity of retransmissions.

5. The method according to any one of claims 1 to 4, wherein the sending (220), by the first device, the first indication information to a second device comprises:
sending, by the first device, the first data packet to the second device, wherein the first data packet comprises the first indication information; or
sending, by the first device, the first indication information to the second device after sending the first data packet.

6. The method according to any one of claims 1 to 5, wherein the first indication information comprises at least one of the following information:
preempted time-frequency resource position information, information about a bit position preempted before encoding, and information about a bit position preempted after the encoding.

7. The method according to any one of claims 1 to 6, wherein when preempted resources of the first data packet are contiguous, the first indication information comprises preempted start position information and preempted end position information.

8. The method according to any one of claims 1 to 7, wherein the second indication information comprises a new data indicator NDI and/or a redundancy version RV.

9. The method according to any one of claims 1 to 8, further comprising:
receiving (220), by the second device, the first indication information sent by a first device; and
receiving (230), by the second device, the first data packet based on the first indication information.

10. The method according to claim 9, wherein the receiving (230), by the second device, the first data packet based on the first indication information comprises:
when detecting the first data packet, ignoring, by the second device, data on the preempted resource position of the first data packet based on the first indication information.

11. The method according to claim 9, wherein the method further comprises:
receiving, by the second device, the second indication information sent by the first device, wherein the second indication information is used to indicate a data type of a second data packet.

12. The method according to claim 11, wherein the second indication information indicates that the second data packet is retransmitted data of the first data packet, and the receiving, by the second device, the first data packet based on the first indication information comprises:
when combining the retransmitted data and the first data packet, ignoring, by the second device, information about the data on the preempted resource position of the first data packet based on the first indication information.

13. A data transmission device (300), comprising:
a processing unit (310), configured to: when a resource position of a first data packet is preempted, generate first indication information, wherein the first indication information is used to indicate information about the preempted resource position of the first data packet; and
a sending unit (320), configured to send the first data packet and the first indication information to a second device, so that the second device receives the first data packet based on the first indication information,
**characterized in that** the processing unit (310) is configured to: determine, based on information about a preempted resource of the first data packet, a performance parameter of demodulation performed by the second device on the first data packet; and
determine second indication information based on the demodulation performance parameter, wherein the second indication information is used to indicate a data type of a second data packet; and wherein the sending unit (320) is further configured to send the second data packet after the first data packet to the second device, and data of the first data packet is the same as data of the second data packet;
wherein the second data packet comprises the second indication information.

14. A system comprising the data transmission device (300) according to claim 13 and the second device, wherein the second device is a further data transmission device (500), comprising a receiving unit (510), wherein the receiving unit (510) is configured to:
receive the first indication information sent by the data transmission device (300), wherein the first indication information comprises information about a preempted resource position of a first data packet; and
receive the first data packet based on the first indication information.

## Patentansprüche

1. Datenübertragungsverfahren, umfassend:
wenn eine Ressourcenposition eines ersten Datenpakets vorweggenommen wird, Erzeugen (210), durch eine erste Vorrichtung, erster Angabeinformationen, wobei die ersten Angabeinformationen verwendet werden, um Informationen über die vorweggenommene Ressourcenposition des ersten Datenpakets anzugeben; und
Senden (220), durch die erste Vorrichtung, des ersten Datenpakets und der ersten Angabeinformationen an eine zweite Vorrichtung, so dass die zweite Vorrichtung das erste Datenpaket basierend auf den ersten Angabeinformationen empfängt, **dadurch gekennzeichnet, dass** das Verfahren ferner umfasst:
Bestimmen, durch die erste Vorrichtung basierend auf Informationen über eine vorweggenommene Ressource des ersten Datenpakets, eines Leistungsparameters der Demodulation, die durch die zweite Vorrichtung an dem ersten Datenpaket durchgeführt wird;
Bestimmen, durch die erste Vorrichtung, von zweiten Angabeinformationen basierend auf dem Demodulationsleistungsparameter, wobei die zweiten Angabeinformationen verwendet werden, um einen Datentyp eines zweiten Datenpakets anzugeben, das zweite Datenpaket nach dem ersten Datenpaket gesendet wird und Daten des ersten Datenpakets die gleichen sind wie Daten des zweiten Datenpakets; und
Senden des zweiten Datenpakets durch die erste Vorrichtung an die zweite Vorrichtung, wobei das zweite Datenpaket die zweiten Angabeinformationen umfasst.

2. Verfahren nach Anspruch 1, wobei das Bestimmen, durch die erste Vorrichtung, von zweiten Angabeinformationen basierend auf dem Demodulationsleistungsparameter umfasst:
Bestimmen, durch die erste Vorrichtung, der zweiten Angabeinformationen, basierend auf dem Demodulationsleistungsparameter und einem Modulations- und Codierungsschema MCS.

3. Verfahren nach Anspruch 2, wobei das Bestimmen, durch die erste Vorrichtung, der zweiten Angabeinformationen basierend auf dem Demodulationsleistungsparameter und einem Modulations- und Codierungsschema MCS umfasst:
wenn der Demodulationsleistungsparameter größer als ein erster Schwellenwert ist, der dem MCS entspricht, Bestimmen, durch die erste Vorrichtung, dass die zweiten Angabeinformationen verwendet werden, um anzugeben, dass das zweite Datenpaket neue Daten betrifft;
wenn der Demodulationsleistungsparameter kleiner als der erste Schwellenwert und größer als ein zweiter Schwellenwert ist, der dem MCS entspricht, Bestimmen, dass die zweiten Angabeinformationen verwendet werden, um anzugeben, dass das zweite Datenpaket erneut übertragene Daten des ersten Datenpakets betrifft und eine Redundanzversion des zweiten Datenpakets die gleiche ist wie eine Redundanzversion des ersten Datenpakets; oder
wenn der Demodulationsleistungsparameter kleiner als der zweite Schwellenwert ist, Bestimmen, dass die zweiten Angabeinformationen verwendet werden, um anzugeben, dass das zweite Datenpaket die erneut übertragenen Daten des ersten Datenpakets betrifft, und die Redundanzversion des zweiten Datenpakets sich von der Redundanzversion des ersten Datenpakets unterscheidet.

4. Verfahren nach Anspruch 3, wobei wenn die zweiten Angabeinformationen verwendet werden, um anzugeben, dass das zweite Datenpaket die erneut übertragenen Daten des ersten Datenpakets betrifft, das Verfahren ferner umfasst:
Akkumulieren einer Anzahl von erneuten Übertragungen des ersten Datenpakets, wobei die Anzahl von Übertragungen verwendet wird, um den ersten Schwellenwert zu bestimmen, und die Anzahl von Übertragungen des ersten Datenpakets zu der Anzahl von erneuten Übertragungen hinzugefügt wird, oder die Anzahl von Übertragungen des ersten Datenpakets nicht zu der Anzahl von erneuten Übertragungen hinzugefügt wird.

5. Verfahren nach einem der Ansprüche 1 bis 4, wobei das Senden (220) der ersten Angabeinformationen durch die erste Vorrichtung an eine zweite Vorrichtung umfasst:
Senden des ersten Datenpakets durch die erste Vorrichtung an die zweite Vorrichtung, wobei das erste Datenpaket die ersten Angabeinformationen umfasst; oder
Senden der ersten Angabeinformationen durch die erste Vorrichtung an die zweite Vorrichtung nach dem Senden des ersten Datenpakets.

6. Verfahren nach einem der Ansprüche 1 bis 5, wobei die ersten Angabeinformationen mindestens eine der folgenden Informationen umfassen:
vorweggenommene Zeit-Frequenz-Ressourcenpositionsinformationen, Informationen über eine vorweggenommene Bitposition vor dem Codieren und Informationen über eine vorweggenommene Bitposition nach dem Codieren.

7. Verfahren nach einem der Ansprüche 1 bis 6, wobei, wenn vorweggenommene Ressourcen des ersten Datenpakets zusammenhängend sind, die ersten Angabeinformationen vorweggenommene Startpositionsinformationen und vorweggenommene Endpositionsinformationen umfassen.

8. Verfahren nach einem der Ansprüche 1 bis 7, wobei die zweiten Angabeinformationen einen neuen Datenindikator NDI und/oder eine Redundanzversion RV umfassen.

9. Verfahren nach einem der Ansprüche 1 bis 8, ferner umfassend:
Empfangen (220), durch die zweite Vorrichtung, der ersten Angabeinformationen, die von einer ersten Vorrichtung gesendet werden; und
Empfangen (230), durch die zweite Vorrichtung, des ersten Datenpakets basierend auf den ersten Angabeinformationen.

10. Verfahren nach Anspruch 9, wobei das Empfangen (230), durch die zweite Vorrichtung, des ersten Datenpakets basierend auf den ersten Angabeinformationen umfasst:
beim Erkennen des ersten Datenpakets, Ignorieren, durch die zweite Vorrichtung, von Daten über die vorweggenommene Ressourcenposition des ersten Datenpakets basierend auf den ersten Angabeinformationen.

11. Verfahren nach Anspruch 9, wobei das Verfahren ferner umfasst:
Empfangen, durch die zweite Vorrichtung, der zweiten Angabeinformationen, die von der ersten Vorrichtung gesendet wurden, wobei die zweiten Angabeinformationen verwendet werden, um einen Datentyp eines zweiten Datenpakets anzugeben.

12. Verfahren nach Anspruch 11, wobei die zweiten Angabeinformationen angeben, dass das zweite Datenpaket erneut übertragene Daten des ersten Datenpakets betrifft, und das Empfangen des ersten Datenpakets durch die zweite Vorrichtung basierend auf den ersten Angabeinformationen umfasst:
beim Kombinieren der neu übertragenen Daten und des ersten Datenpakets, Ignorieren, durch die zweite Vorrichtung, von Informationen über die Daten auf der vorweggenommenen Ressourcenposition des ersten Datenpakets basierend auf den ersten Angabeinformationen.

13. Datenübertragungsvorrichtung (300), umfassend:
eine Verarbeitungseinheit (310), die dazu konfiguriert ist: wenn eine Ressourcenposition eines ersten Datenpakets vorweggenommen wird, erste Angabeinformationen zu erzeugen, wobei die ersten Angabeinformationen dazu verwendet werden, Informationen über die vorweggenommene Ressourcenposition des ersten Datenpakets anzugeben; und
eine Sendeeinheit (320), die dazu konfiguriert ist, das erste Datenpaket und die ersten Angabeinformationen an eine zweite Vorrichtung zu senden, so dass die zweite Vorrichtung das erste Datenpaket basierend auf den ersten Angabeinformationen empfängt,
**dadurch gekennzeichnet, dass** die Verarbeitungseinheit (310) dazu konfiguriert ist, basierend auf Informationen über eine vorweggenommene Ressource des ersten Datenpakets einen Leistungsparameter der Demodulation zu bestimmen, die von der zweiten Vorrichtung an dem ersten Datenpaket durchgeführt wird; und
zweite Angabeinformationen basierend auf dem Demodulationsleistungsparameter zu bestimmen,
wobei die zweiten Angabeinformationen verwendet werden, um einen Datentyp eines zweiten Datenpakets anzugeben; und wobei die Sendeeinheit (320) ferner dazu konfiguriert ist, das zweite Datenpaket nach dem ersten Datenpaket an die zweite Vorrichtung zu senden, und die Daten des ersten Datenpakets die gleichen sind wie die Daten des zweiten Datenpakets;
wobei das zweite Datenpaket die zweiten Angabeinformationen umfasst.

14. System, umfassend die Datenübertragungsvorrichtung (300) nach Anspruch 13 und die zweite Vorrichtung, wobei die zweite Vorrichtung eine weitere Datenübertragungsvorrichtung (500) ist, umfassend eine Empfangseinheit (510), wobei die Empfangseinheit (510) dazu konfiguriert ist:
die von der Datenübertragungsvorrichtung (300) gesendeten ersten Angabeinformationen zu empfangen, wobei die ersten Angabeinformationen Informationen über eine vorweggenommene Ressourcenposition eines ersten Datenpakets umfassen; und
das erste Datenpaket basierend auf den ersten Angabeinformationen zu empfangen.

## Revendications

1. Procédé de transmission de données comprenant:
quand une position de ressources d'un premier paquet de données est préemptée, la génération (210), par un premier dispositif, de premières informations d'indication, les premières informations d'indication servant à indiquer des informations relatives à la position de ressources préemptée du premier paquet de données ; et
l'envoi (220), par le premier dispositif, du premier paquet de données et des premières informations d'indication à un second dispositif, de telle sorte que le second dispositif reçoive le premier paquet de données en fonction des premières informations d'indication, **caractérisé en ce que** le procédé comprend en outre :
la détermination, par le premier dispositif en fonction des informations relatives à une ressource préemptée du premier paquet de données, d'un paramètre de performance d'une démodulation effectuée par le second dispositif sur le premier paquet de données ;
la détermination, par le premier dispositif, de secondes informations d'indication en fonction du paramètre de performance de démodulation, les secondes informations d'indication servant à indiquer un type de données d'un second paquet de données, le second paquet de données étant envoyé après le premier paquet de données, et des données du premier paquet de données étant identiques à des données du second paquet de données ; et
l'envoi, par le premier dispositif, du second paquet de données au second dispositif, le second paquet de données comprenant les secondes informations d'indication.

2. Procédé selon la revendication 1, dans lequel la détermination, par le premier dispositif, de secondes informations d'indication en fonction du paramètre de performance de démodulation comprend :
la détermination, par le premier dispositif, des secondes informations d'indication en fonction du paramètre de performance de démodulation et d'un plan de modulation et codage MCS.

3. Procédé selon la revendication 2, dans lequel la détermination, par le premier dispositif, des secondes informations en fonction du paramètre de performance de démodulation et d'un plan de modulation et codage MCS comprend :
si le paramètre de performance de démodulation est supérieur à un premier seuil correspondant au MCS, la détermination, par le premier dispositif, que les secondes informations d'indication servent à indiquer que le second paquet de données consiste en de nouvelles données ;
si le paramètre de performance de démodulation est inférieur au premier seuil et supérieur à un second seul correspondant au MCS, la détermination que les secondes informations d'indication servent à indiquer que le second paquet de données consiste en données retransmises du premier paquet de données, et qu'une version de redondance du second paquet de données est identique à une version de redondance du premier paquet de données ; ou
si le paramètre de performance de démodulation est inférieur au second seuil, la détermination que les secondes informations d'indication servent à indiquer que le second paquet de données consiste en les données retransmises du premier paquet de données, et que la version de redondance du second paquet de données est différente de la version de redondance du premier paquet de données.

4. Procédé selon la revendication 3, le procédé comprenant en outre quand les secondes informations d'indication servent à indiquer que le second paquet de données consiste en les données retransmises du premier paquet de données :
l'accumulation d'une quantité de retransmissions du premier paquet de données, dans lequel la quantité de transmissions sert à déterminer le premier seuil, et la quantité de transmissions du premier paquet de données est ajoutée à la quantité de retransmissions, ou la quantité de transmissions du premier paquet de données n'est pas ajoutée à la quantité de retransmissions.

5. Procédé selon l'une quelconque des revendications 1 à 4, dans lequel l'envoi (220), par le premier dispositif, des premières informations d'indication à un second dispositif comprend :
l'envoi, par le premier dispositif, du premier paquet de données au second dispositif, le premier paquet de données comprenant les premières informations d'indication ; ou l'envoi, par le premier dispositif, des premières informations d'indication au second dispositif après l'envoi du premier paquet de données.

6. Procédé selon l'une quelconque des revendications 1 à 5, dans lequel les premières informations d'indication comprennent au moins des informations parmi les informations suivantes :
des informations de position de ressources temps-fréquence préemptée, des informations relatives à une position de bit préemptée avant encodage, et des informations relatives à une position de bit préemptée après encodage.

7. Procédé selon l'une quelconque des revendications 1 à 6, dans lequel quand des ressources préemptées du premier paquet de données sont contiguës, les premières informations d'indication comprennent des informations de position de début préemptée et des informations de position de fin préemptée.

8. Procédé selon l'une quelconque des revendications 1 à 7, dans lequel les secondes informations d'indication comprennent un indicateur de nouvelles données NDI et/ou une version de redondance RV.

9. Procédé selon l'une quelconque des revendications 1 à 8, comprenant en outre :
la réception (220), par le second dispositif, des premières informations d'indication envoyées par un premier dispositif ; et
la réception (230), par le second dispositif, du premier paquet de données en fonction des premières informations d'indication.

10. Procédé selon la revendication 9, dans lequel la réception (230), par le second dispositif, du premier paquet de données en fonction des premières informations d'indication comprend :
lors de la détection du premier paquet de données, la non considération, par le second dispositif, de données relatives à la position de ressources préemptée du premier paquet de données en fonction des premières informations d'indication.

11. Procédé selon la revendication 9, le procédé comprenant en outre :
la réception, par le second dispositif, des secondes informations d'indication envoyées par le premier dispositif, dans lequel les secondes informations d'indication servent à indiquer un type de données d'un second paquet de données.

12. Procédé selon la revendication 11, dans lequel les secondes informations d'indication indiquent que le second paquet de données consiste en données retransmises du premier paquet de données, et la réception, par le second dispositif, du premier paquet de données en fonction des premières informations d'indication comprend :
lors d'une combinaison des données retransmises et du premier paquet de données, la non-considération, par le second dispositif, d'informations relatives aux données sur la position de ressources préemptée du premier paquet de données en fonction des premières informations d'indication.

13. Dispositif de transmission de données (300), comprenant :
une unité de traitement (310), configurée pour : quand une position de ressources d'un premier paquet de données est préemptée, générer des premières informations d'indication, les premières informations d'indication servant à indiquer des informations relatives à la position de ressources préemptée du premier paquet de données ; et
une unité d'envoi (320), configurée pour envoyer le premier paquet de données et les premières informations d'indication à un second dispositif, de telle sorte que le second dispositif reçoive le premier paquet de données en fonction des premières informations d'indication,
**caractérisé en ce que** l'unité de traitement (310) est configurée pour : déterminer, en fonction d'informations sur une ressource préemptée du premier paquet de données, un paramètre de performance d'une démodulation exécutée par le second dispositif sur le premier paquet de données ; et
déterminer des secondes informations d'indication en fonction du paramètre de performance de démodulation,
dans lequel les secondes informations d'indication servent à indiquer un type de données d'un second paquet de données ; et dans lequel l'unité d'envoi (320) est configurée en outre pour envoyer le second paquet de données après le premier paquet de données au second dispositif, et des données du premier paquet de données sont identiques à des données du second paquet de données ;
dans lequel le second paquet de données comprend les secondes informations d'indication.

14. Système comprenant le dispositif de transmission de données (300) selon la revendication 13 et le second dispositif, le second dispositif étant un autre dispositif de transmission de données (500), comprenant une unité de réception (510), l'unité de réception (510) étant configurée pour :
recevoir les premières informations d'indication envoyées par le dispositif de transmission de données (300), les premières informations d'indication comprenant des informations relatives à une position de ressources préemptée d'un premier paquet de données ; et
recevoir le premier paquet de données en fonction des premières informations d'indication.
